# EUROPÄISCHE PATENTSCHRIFT

(11) **EP 3 963 434 B1**
(45) Veröffentlichungstag und Bekanntmachung des Hinweises auf die Patenterteilung: **15.02.2023**
(21) Anmeldenummer: 21712447.8
(22) Anmeldetag: 11.03.2021
(51) Int. Cl.: G06F 3/041, G06F 3/0488, G06F 3/04883

(54) **VERFAHREN UND VORRICHTUNG ZUR AUSWAHL VON AUF EINEM BILDSCHIRM ANGEZEIGTEN EINGABEFELDERN UND/ODER ZUR AKTIVIERUNG VON AUF DEM BILDSCHIRM IN EINEM AUSGEWÄHLTEN EINGABEFELD ANGEZEIGTEN EINGABEINHALTEN DURCH MANUELLE EINGABEN**
METHOD AND DEVICE FOR SELECTING INPUT FIELDS DISPLAYED ON A SCREEN AND/OR FOR ACTIVATING INPUT CONTENT DISPLAYED IN A SELECTED INPUT FIELD ON THE SCREEN BY MEANS OF MANUAL INPUTS
PROCÉDÉ ET DISPOSITIF POUR SÉLECTIONNER DES CHAMPS D'ENTRÉE AFFICHÉS SUR UN ÉCRAN ET/OU POUR ACTIVER UN CONTENU D'ENTRÉE AFFICHÉ DANS UN CHAMP D'ENTRÉE SÉLECTIONNÉ SUR L'ÉCRAN AU MOYEN D'ENTRÉES MANUELLES

(30) Priorität: 20.03.2020 DE 102020107752
(43) Veröffentlichungstag der Anmeldung: 09.03.2022
(73) Patentinhaber: Mercedes-Benz Group AG, 70372 Stuttgart (DE)
(72) Erfinder: MÖRZ, Sebastian, 71063 Sindelfingen (DE); FLACHS, Konrad, 70439 Stuttgart (DE)
(74) Vertreter: JENSEN & SON
(86) Internationale Anmeldenummer: PCT/EP2021/056144
(87) Internationale Veröffentlichungsnummer: WO 2021/185664

(56) Entgegenhaltungen:
- WO-A1-2018/213451
- US-A1- 2008 041 640
- US-B1- 8 970 525

## Beschreibung

Die Erfindung betrifft ein Verfahren und eine Vorrichtung zur Auswahl von auf einem Bildschirm angezeigten Eingabefeldern und/oder zur Aktivierung von auf dem Bildschirm in einem ausgewählten Eingabefeld angezeigten Eingabeinhalten durch manuelle Eingaben in eine Eingabefläche einer Eingabeschnittstelle, wobei die Eingabeschnittstelle zur haptischen Gesteneingabe in die Eingabefläche, um die Auswahl eines Eingabefelds zu steuern, und zur Aktivierung eines Eingabeinhalts eines ausgewählten Eingabefeldes durch Auslösen einer elektrischen Schaltfunktion der Eingabeschnittstelle mittels Ausüben einer vorgegebenen Mindestkraft auf die Eingabefläche, ausgeführt ist.

Es ist bekannt, aus einer Vielzahl auf einem Bildschirm angezeigten, mit Eingabeinhalten hinterlegten Eingabefeldern (bspw. Zeilen, Spalten oder anders geformte Eingabebereiche auf dem Bildschirm) durch Gesteneingaben in ein berührempfindliches Eingabefeld einer Eingabeschnittstelle ein angezeigtes Eingabefeld und damit den hinterlegten Inhalt auszuwählen. Weiterhin ist bekannt, Eingabeinhalte eines ausgewählten Eingabefeldes durch haptische Eingaben in die Eingabeschnittstelle, insbesondere durch Ausüben einer vorgegebenen Mindestkraft auf das Eingabefeld zu aktivieren.

So ist aus der US 2011/0134061 A1 ein Verfahren bekannt, bei dem in Abhängigkeit von durch haptische Eingaben in ein berührempfindliches Eingabefeld bewirkten Sensorsignalverläufen unterschiedliche Funktionen ausgeführt werden.

Die WO 2018/213451 A1 beschreibt ein Touchdisplay mit Kontaktintensitätssensoren zum Erfassen der Intensität von Kontakten auf einer berührungsempfindlichen Oberfläche, wobei abhängig von der Höhe der Bedienintensität verschiedene Reaktionen ausgelöst werden.

Die US 8 970 525 B1 offenbart eine mit einem Finger durch Wischen bedienbar Vorrichtung. Die Vorrichtung umfasst eine Bedienfläche, eine Position des Fingers auf der Bedienfläche wird zur Steuerung eines Cursors auf einer der Bedienfläche zugeordneten Anzeigeeinheit ausgewertet. Ergibt die Prüfung, dass kein neuer Fingerkontakt oder eine Schalterstatusänderung vorliegt, dann wird in einem weiteren Schritt überprüft, ob für den bestehenden Kontakt durch einen Finger ein Flag "blocking" increasing pressure or decreasing pressure" gesetzt ist. Ist das Flag gesetzt wird eine Veränderung der Cursorposition auf dem Display blockiert oder eine Druckänderung auf der Bedienfläche ignoriert

Aufgabe der Erfindung ist es, ein gattungsgemäßes Verfahren sowie eine gattungsgemä-ße Vorrichtung anzugeben, wobei eine robustere, d.h. zuverlässigere Auswahl und Aktivierung von Eingabefeldern bzw. Eingabeinhalten ermöglicht wird.

Die Erfindung beruht auf der Erkenntnis, dass bei einer Belegung einer gattungsgemäßen Eingabefläche mit zwei Eingabeoptionen: erstens einer Gesteneingabe zur Auswahl der jeweiligen Eingabefläche, und zweitens einer Betätigung einer Schaltfunktion (insbesondere durch Betätigung eines mit der Eingabefläche verbundenen mechanischen Schalters) durch Ausübung einer entsprechenden Kraft auf die Eingabefläche zur Aktivierung einer für diese Eingabefläche hinterlegten Funktion, zu folgendem Problem führt.

Die Auswahl der jeweiligen Eingabefläche erfolgt vorzugsweise mittels eines auf dem Bildschirm angezeigten Cursors, der auf Basis der Gesteneingabe auf dem Bildschirm in seiner angezeigten Position verändert und so auf einem auszuwählenden Eingabefeld platziert werden kann. Durch Ausüben einer Kraft auf das Eingabefeld (Ausüben der Schaltfunktion) wird der Eingabeinhalt, der für das mittels Cursor ausgewählte Eingabefeld hinterlegt ist, aktiviert.

Beim Betätigen der Schaltfunktion durch Ausüben einer entsprechenden Eingabekraft auf die Eingabefläche mittels eines Fingers eines Benutzers, verformt sich dessen Finger, was wiederum zu einer Veränderung der Form der Fingerauflagefläche auf der Eingabefläche führt und entsprechend erfasst wird. Diese Veränderung der Fingerauflagefläche verschiebt im Allgemeinen den detektieren Fingerschwerpunkt und kann daher als veränderte Eingabeposition einer Gesteneingabe interpretiert werden. Durch diese Änderung der Eingabeposition kann bei einer ausschließlichen Betätigung der Schaltfunktion fälschlicherweise eine Fingerbewegung erkannt, eine Gesteneingabe unterstellt und der Cursor bewegt werden. Dadurch sind Fehlbedienungen möglich.

Beispielsweise hat ein Fahrer eines Fahrzeugs in einem auf einem Bildschirm angezeigten Menü eine Option durch Positionieren eines Cursors (beispielsweise in einer Liste) angewählt und möchte diese aktivieren. Durch das Abrollen des Fingers auf der Eingabefläche einer ebenfalls im Fahrzeug vorhandenen Eingabeschnittstelle kommt es vor dem Ausführen der Schaltfunktion durch die erfasste, veränderte Fingerauflagefläche zu einer Fehlinterpretation der Eingabe als Gesteneingabe. Wenn diese als Gesteneingabe interpretierte Eingabe unmittelbar vor dem Auslösen der elektrischen Schaltfunktion zu einer geänderten und ungewollten Auswahl einer Menüoption führt (durch eine entsprechend geänderte Cursorposition), wird beim Auslösen der Schaltfunktion die falsche Option aus dem Menü aktiviert. Beim Entfernen des Fingers von der Eingabefläche ändert sich die Fingerauflagefläche wiederum (üblicherweise in entgegengesetzter Richtung), sodass der Cursor wieder in seine ursprüngliche Position springt.

Aus Sicht des Bedieners führt so eine einfache Eingabe zur Auslösung der Schaltfunktion dazu, dass zunächst ein falsches Eingabefeld ausgewählt und aktiviert wird, bevor der Cursor wieder auf das ursprünglich gewollte Eingabefeld zurück springt, ohne es aber aktiviert zu haben.

Die Erfindung hat insbesondere das Ziel derartige Probleme zu minimieren. Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zur Auswahl von auf einem Bildschirm angezeigten Eingabefeldern und zur Aktivierung von auf dem Bildschirm in einem ausgewählten Eingabefeld angezeigten Eingabeinhalten gemäß Anspruch 1.

Das Verfahren wird vorteilhaft iterativ mit vorgegebenen Zeitschritten i ausgeführt. Das heißt, die Zeit t verläuft nicht kontinuierlich, sondern in vorgegebenen Zeitinkrementen Δt. Dabei ergibt die Ausführung eines Zeitschritts i -> i+1: tᵢ₊₁ = tᵢ + Δt.

Unter dem Begriff "Bildschirm" wird vorliegend beispielsweise ein LCD-, LED-, OLED- oder Plasmabildschirm verstanden, der vorteilhaft zur Anzeige von alphanumerischen und grafischen Elementen, insbesondere von Eingabefeldern, in denen Eingabeinhalte angezeigt werden, ausgeführt ist. Vorteilhaft ist der Bildschirm Teil eines Fahrzeugsystems, insbesondere eines Navigationssystems, eines Entertainmentsystems, eines Infotainmentsystems oder eines Klimasystems.

Unter dem Begriff "Eingabefeld" wird vorliegend ein vorteilhaft optisch "hervorgehobener" Flächenbereich auf dem Bildschirm verstanden, dem ein "Eingabeinhalt" zugewiesen ist, wobei bei Auswahl und Aktivierung des betreffenden Eingabefeldes bzw. dessen Eingabeinhaltes eine zugeordnete Funktion ausgeführt wird. Das optische "Hervorheben" erfolgt beispielsweise durch eine auffällige Einfärbung der Eingabefelder. Beispielsweise werden auf einem Bildschirm zeilenweise verschiedene Radiosender angezeigt. In diesem Fall entspricht eine Zeile einem Eingabefeld einer Liste. Durch die Auswahl eines solchen Eingabefeldes, respektive einer Zeile, und die Aktivierung des zugeordneten Eingabeinhaltes, respektive des zugeordneten Radiosenders, wird dieser Radiosender bspw. ausgewählt und ist dadurch zu hören. Die Aktivierung erfolgt dabei durch Ausüben einer Mindesteingabekraft auf die Eingabefläche. Auf dem Bildschirm können ein oder mehrere Eingabefelder angezeigt werden, die Eingabefelder selbst können gleiche oder unterschiedliche Formen aufweisen. Die durch Auswahl eines Eingabefeldes und Aktivierung seines Eingabeinhaltes bewirkten Funktionen können je nach Aufgabenstellung entsprechend gewählt werden.

Unter dem Begriff "Eingabefläche" wird vorliegend eine berührungsempfindliche Oberfläche eines entsprechenden berührungsempfindlichen Sensors verstanden. Derartige berührungsempfindliche Sensoren umfassen vorteilhaft eine Vielzahl von resistiven Sensorelementen oder eine Vielzahl von kapazitiven Sensorelementen oder eine Mischung von resitiven und kapazitiven Sensorelementen. Die Eingabefläche dient somit zur Erfassung von haptischen bzw. manuellen Gesteneingaben. Die Sensorelemente bilden vorteilhaft ein Sensorarray, welches die Auswertung von Eingabepositionen der Gesteneingabe auf einer Eingabefläche ermöglicht. Derartige Gesteneingaben erfolgen typischerweise durch einen Benutzer mittels einer seiner Finger. Die Eingabefläche weist daher vorteilhaft eine entsprechende Größe auf, so dass Gesteneingaben mittels eines Fingers sinnvoll möglich sind. Vorteilhaft ist die Eingabefläche nicht identisch mit dem Bildschirm oder einem Teil des Bildschirms, so dass die Eingabefläche an einer ergonomisch optimierten Position, unabhängig vom Bildschirm angeordnet sein kann. Vorteilhaft ist die Eingabefläche der Eingabeschnittstelle im Bereich eines Fahrzeugcockpits, insbesondere an einem Steuerknüppel, an einem Lenkrad oder einem Gangwahlhebel, an einer Mittelkonsole, an einem Anzeigepanel angeordnet.

Unter dem Begriff "Eingabeschnittstelle" wird vorliegend vorteilhaft die Eingabefläche, ein zugeordnetes berührungsempfindliches Sensorarray sowie ein mit der Eingabefläche gekoppelter mechanischer Schalter, der durch Ausüben einer Mindestkraft auf die Eingabefläche eine elektrische Schaltfunktion ausführt (bei Ausüben einer Kraft, die kleiner als die Mindestkraft ist, wird demzufolge die elektrische Schaltfunktion nicht ausgeführt).

Vorteilhaft ist die Eingabefläche die Eingabefläche eines kapazitiven Flächensensors, der eine Vielzahl von kapazitiven Sensorelementen (kapazitives Sensorarray) aufweist, welche zur Ermittlung der Fläche F(t) und somit auch des Betrages |F(t)| verwendet werden. Der Betrag |F(t)| entspricht vorliegend dem Flächeninhalt der Fläche F(t), mit der die manuelle Gesteneingabe auf die Eingabefläche einwirkt. Mit einem derartigen kapazitiven Flächensensor können Gesteneingaben bereits durch Nahfeldwirkung erfasst werden, wenn beispielsweise der Finger eines Benutzers die Eingabefläche mechanisch noch nicht berührt.

Vorteilhaft wird die aktuelle Eingabeposition POS(t) zur Zeit t als Schwerpunkt oder Mittelpunkt des aktuell erfassten Flächenbereichs F(t) bestimmt.

Erfolgt von dem ersten Zeitpunkt t₁ bis zu dem zweiten Zeitpunkt t₂ eine kontinuierliche Gesteneingabe in die Eingabefläche, so wird aus den ermittelten Eingabepositionen POS(t₁) und POS(t₂) der Verschiebevektor V(POS(t₁),POS(t₂)) ermittelt. Der Verschiebevektor V(POS(t₁),POS(t₂)) definiert sich entsprechend durch Richtung und Länge. Vorteilhaft entspricht der zweite Zeitpunkt t₂ der aktuellen Zeit t. Vorteilhaft entspricht der erste Zeitpunkt t₁ der Zeit, zu der die aktuelle Gesteneingabe begonnen hat.

In einem weiteren Schritt erfolgt, sofern gilt: |F(t₂)| < |F(t₁)|, das Auswählen des in Richtung des Verschiebevektors V(POS(t₁),POS(t₂)) von einer zur Position POS(t₁) auf dem Bildschirm zugeordneten Position POS_{SCREEN}(POS(t₁)) aus gesehen nebengeordneten oder zumindest nächstliegenden Eingabefeldes. Vorteilhaft ist hierzu lediglich die ermittelte Richtung des Verschiebevektors V(POS(t₁),POS(t₂)) maßgeblich. In einer Ausführungsform wird bei der Auswahl des nebengeordneten oder zumindest nächstliegenden Eingabefeldes sowohl die ermittelte Richtung als auch die ermittelte Länge des Verschiebevektors V(POS(t₁),POS(t₂)) berücksichtigt und die der Position POS_{SCREEN}(POS(t₂)) auf dem Bildschirm zugehörige Funktion ausgelöst.

Das vorgeschlagene Verfahren ermöglicht es, anhand der zeitlichen Veränderung des Betrages |F(t)| des Flächeninhalts der Fläche F(t) die Auswahl einer Eingabefläche robuster zu machen, insbesondere eine durch Veränderungen einer Fingerauflagefläche bewirkte Fehlauslösungen während der Gesteneingabe zu vermeiden. Ein ermittelter Verschiebevektor V(POS(t₁),POS(t₂)) wird in Abhängigkeit der Veränderung von |F(t)| bei der Auswahl eines Eingabefeldes berücksichtigt oder verworfen. In dem Fall (|F(t₂)| < |F(t₁)|) wird die Auswahl eines Eingabefeldes auf dem Bildschirm entsprechend Richtung und/oder Weg des Verschiebevektors V(POS(t₁),POS(t₂)) geändert. Im dem anderen Fall (|F(t₂)| > |F(t₁)|), wenn der Verschiebevektor V(POS(t₁),POS(t₂)) verworfen wird, erfolgt keine Änderung der zur Zeit t₁ bestehenden Auswahl eines Eingabefeldes. Mit anderen Worten, falls (|F(t₂)| >|F(t₁)|) wird der Verschiebevektor V(POS(t₁),POS(t₂)) verworfen und das der Position POS(t₁) zugeordnete Eingabefeld auf dem Bildschirm bleibt ausgewählt. Durch Druck der auf das Eingabefeld ausgelösten elektrischen Schaltfunktion wird dann die dem der Position POS_{SCREEN}(POS(t₁)) zugeordnete Funktion zum Zeitpunkt t2 aktiviert. Für den seltenen Fall, dass genau (|F(t₂)| = |F(t₁)|) kann alternativ je nach geometrischer Anordnung der Eingabeflächen in Bezug zum Benutzer die Auswahl eines Eingabefeldes auf dem Bildschirm wie vorab beschrieben entsprechend dem Verschiebevektor V(POS(t₁),POS(t₂)) geändert oder verworfen werden.

Das erfindungsgemäße Verfahren zeichnet sich dadurch aus, dass eine Auswahl eines Eingabefeldes und die Aktivierung eines Eingabeinhalts eines ausgewählten Eingabefeldes unter der Bedingung |F(t₂)| < |F(t₁)| nur für eine oder mehrere vorgegebene Richtungen des Verschiebevektors V(POS(t₁), POS(t₂)) erfolgt. Hierbei wird vorausgesetzt, dass das Flächensignal gegen Ende einer gewollten Fingerbewegung abnimmt. Allerdings trifft dies vorzugsweise bei Bedienung von einem touchbedienbaren Eingabefeld nur in bestimmten Richtungen auf, insbesondere an einem an einem Lenkrad angeordneten mit einem Daumen bedienbaren Eingabefeld bei einer Wischbewegung von oben nach unten oder in Richtung Lenkradmittelpunkt. In anderen Richtungen, beispielsweise an einem mit einem Daumen bedienbaren Eingabefelds eines Lenkrads von unten nach oben, wird daher das in Richtung des Verschiebevektors aus gesehene nebengeordnete oder zumindest nächstliegenden Eingabefeld ausgewählt und bei Auslösung der elektrischen Schaltfunktion eine dem Eingabeinhalt dieses Eingabefeldes zugeordnete Funktion aktiviert, selbst wenn gilt |F(t₂)| > |F(t₁)|.

Eine vorteilhafte Weiterbildung des vorgeschlagenen Verfahrens zeichnet sich dadurch aus, dass für den Fall, dass ausgehend vom ersten Zeitpunkt t₁ eine Vergrößerung des Betrages |F(t)| für eine vorgegebene Zeitdauer Δt_{MAX} erfolgt, für den als Ende der Zeitdauer Δt_{MAX} definierten zweiten Zeitpunkt t₂ = t₁ + Δt_{MAX} der Verschiebevektor V(POS(t₁),POS(t₂)) ermittelt wird und das in Richtung des Verschiebevektors V(POS(t₁),POS(t₂)) von einer zur Position POS(t₁) auf dem Bildschirm zugeordneten Position POS_{SCREEN}(POS(t₁)) aus gesehen nächstliegenden Eingabefeldes ausgewählt wird. Diese Weiterbildung berücksichtigt insbesondere Fehlinterpretationen bei langsam ausgeführten Gesteneingaben. Bei langsam ausgeführten Gesteneingaben ergibt sich beispielsweise, dass der Betrag |F(t)| für etwa 300-600 ms, insbesondere für 500 ms ansteigt, bevor er wieder zu sinken beginnt. Dieses Zeitverhalten ist typisch für langsam ausgeführte Gesteneingaben und eher untypisch für die Ausführung einer Eingabe zur reinen Ausführung der Schaltfunktion. Um eine langsam ausgeführte Gesteneingabe nicht unnötig zu verzögern, wird daher die Zeitdauer Δt_{MAX} vorgegeben, die derart gewählt ist, dass die meisten Eingaben zur Ausübung der Schaltfunktion abgefangen werden und langsam ausgeführte Gesteneingaben erfasst werden.

Eine vorteilhafte Weiterbildung des vorgeschlagenen Verfahrens zeichnet sich dadurch aus, dass das auf dem Bildschirm von der Position POS_{SCREEN}(POS(t₁)) aus gesehen nächstliegende Eingabefeld nur ausgewählt wird, wenn ein während der Gesteneingabe auf die Eingabefläche wirkender Kraftverlauf K(t) im Zeitraum t₁ bis t₂ jeweils Gradienten grad (K(t)) unterhalb eines vorgegebenen Gradienten GRAD aufweist: grad (K(t)) < GRADK. Bei diesem Verfahren wird somit ein auf die Eingabefläche wirkender Kraftverlauf K(t) mit einem entsprechenden Kraftsensor erfasst. Hintergrund dieser Weiterbildung ist, dass das Kraftsignal bei einer beginnenden Eingabe zur Ausübung der Schaltfunktion deutlich vor einer Sättigung des Betrages |F(t)| zu steigen beginnt. Diese Weiterbildung berücksichtigt ebenfalls insbesondere Fehlinterpretationen bei langsam ausgeführten Gesteneingaben.

Eine vorteilhafte Weiterbildung des vorgeschlagenen Verfahrens zeichnet sich dadurch aus, dass sofern sich nach dem ersten Zeitpunkt t₁ der Betrag |F(t)| bis zum Auslösen der elektrischen Schaltfunktion vergrößert, mit dem Auslösen der Schaltfunktion das zum ersten Zeitpunkt t₁ auf dem Bildschirm ausgewählte Eingabefeld ausgewählt und der Eingabeinhalt dieses Eingabefeldes aktiviert wird. In dieser Weiterbildung wird der Verschiebevektor V(POS(t₁),POS(t₂)) verworfen und somit das ursprünglich (zum Zeitpunkt t₁) gewählte Eingabefeld beibehalten und dessen Eingabeinhalt beim Auslösen der Schaltfunktion aktiviert.

Eine vorteilhafte Weiterbildung des vorgeschlagenen Verfahrens zeichnet sich dadurch aus, dass im Fall, dass gilt: |F(t₂)| < |F(t₁)|, das in Richtung des Verschiebevektors V(POS(t₁),POS(t₂)) von einer zur Position POS(t₁) auf dem Bildschirm zugeordneten Position POS_{SCREEN}(POS(t₁)) aus gesehen nächstliegende Eingabefeld ausgewählt und beim Auslösen der Schaltfunktion zum Zeitpunkt t₂ der Eingabeinhalt dieses Eingabefeldes aktiviert wird. In dieser Weiterbildung wird ein Eingabefeld entsprechend dem Verschiebevektor V(POS(t₁),POS(t₂)) ausgewählt und der Eingabeinhalt dieses Eingabefeldes beim Auslösen der Schaltfunktion aktiviert.

Eine vorteilhafte Weiterbildung des vorgeschlagenen Verfahrens zeichnet sich dadurch aus, dass nach dem Auslösen der Schaltfunktion für einen vorgegebenen Zeitraum Δt_{SCHALT} ermittelte Verschiebevektoren V(POS(t₁),POS(t₂)) zur Auswahl eines Eingabefeldes verworfen werden. Dies bewirkt, dass nach dem Auslösen der Schaltfunktion keine Änderung des zu diesem Zeitpunkt ausgewählten Eingabefeldes erfolgt.

Eine vorteilhafte Weiterbildung des vorgeschlagenen Verfahrens zeichnet sich dadurch aus, dass eine Auswahl eines Eingabefeldes und/oder die Aktivierung eines Eingabeinhalts eines ausgewählten Eingabefeldes nur erfolgt, sofern der Betrag |V(POS(t₁),POS(t₂))| des Verschiebevektors V(POS(t₁),POS(t₂)) einen vorgegebenen Grenzwert überschreitet. In dieser Weiterbildung werden insbesondere unabsichtliche Gesteneingaben in das Eingabefeld verworfen.

Vorteilhaft wird ein Anstieg oder eine Verkleinerung des Betrages |F(t)| des Flächenbereichs F(t) jeweils in vorgegebenen Toleranzzeitbereichen detektiert/ausgewertet. Dadurch kann sichergestellt werden, dass Betragsänderungen von |F(t)| erst ab einem vorgegebenen Differenzbetrag in dem Verfahren berücksichtigt werden.

Ein weiterer Aspekt der Erfindung betrifft eine Vorrichtung gemäß Anspruch 8.

Eine vorteilhafte Weiterbildung der vorgeschlagenen Vorrichtung zeichnet sich dadurch aus, dass das Auswertemittel derart ausgeführt und eingerichtet ist, dass im Fall, dass ausgehend vom ersten Zeitpunkt t₁ eine Vergrößerung des Betrages |F(t)| für eine vorgegebene Zeitdauer Δt_{MAX} erfolgt, an dem als Ende der Zeitdauer Δt_{MAX} definierten zweiten Zeitpunkt t₂ = t₁ + Δt_{MAX} der Verschiebevektor V(POS(t₁),POS(t₂)) ermittelt wird, und das Steuermittel derart ausgeführt und eingerichtet ist, dass das in Richtung des Verschiebevektors V(POS(t₁),POS(t₂)) zum ersten Zeitpunkt t₁ auf dem Bildschirm nächstliegende Eingabefeld ausgewählt wird.

Eine vorteilhafte Weiterbildung der vorgeschlagenen Vorrichtung zeichnet sich dadurch aus, dass die Eingabeschnittstelle einen Kraftsensor zur Erfassung einer auf die Eingabefläche ausgeübten Kraft K(t) aufweist, und das Steuermittel derart ausgeführt und eingerichtet ist, dass das auf dem Bildschirm von der Position POS_{SCREEN}(POS(t₁)) aus gesehen nächstliegende Eingabefeld ausgewählt wird, wenn ein während der Gesteneingabe auf die Eingabefläche wirkender Kraftverlauf K(t) im Zeitraum t₁ bis t₂ jeweils Gradienten grad (K(t)) unterhalb eines vorgegebenen Gradienten GRAD aufweist: grad (K(t)) < GRADK. Eine vorteilhafte Weiterbildung der vorgeschlagenen Vorrichtung zeichnet sich dadurch aus, dass die Eingabefläche die Eingabefläche eines kapazitiven Flächensensors ist, der eine Vielzahl von kapazitiven Sensorelementen aufweist, welche zur Ermittlung des Betrages |F(t)| verwendet werden.

Eine vorteilhafte Weiterbildung der vorgeschlagenen Vorrichtung zeichnet sich dadurch aus, dass das Auswertemittel derart ausgeführt und eingerichtet ist, dass die Eingabepositionen POS(t) als Schwerpunkt oder Mittelpunkt des Flächenbereichs F(t) bestimmt werden.

Eine vorteilhafte Weiterbildung der vorgeschlagenen Vorrichtung zeichnet sich dadurch aus, dass das Steuermittel derart ausgeführt und eingerichtet ist, dass im Fall, dass sich nach dem ersten Zeitpunkt t₁ der Betrag |F(t)| bis zum Auslösen der elektrischen Schaltfunktion vergrößert, mit dem Auslösen der Schaltfunktion das zum ersten Zeitpunkt t₁ auf dem Bildschirm ausgewählte Eingabefeld ausgewählt und der Eingabeinhalt dieses Eingabefeldes aktiviert wird.

Eine vorteilhafte Weiterbildung der vorgeschlagenen Vorrichtung zeichnet sich dadurch aus, dass das Steuermittel derart ausgeführt und eingerichtet ist, dass nach dem Auslösen der Schaltfunktion für einen vorgegebenen Zeitraum Δt_{SCHALT} ermittelte Verschiebevektoren V(POS(t₁),POS(t₂)) zur Auswahl eines Eingabefeldes verworfen werden.

Eine vorteilhafte Weiterbildung der vorgeschlagenen Vorrichtung zeichnet sich dadurch aus, dass das Steuermittel derart ausgeführt und eingerichtet ist, dass eine Auswahl eines Eingabefeldes und/oder die Aktivierung eines Eingabeinhalts eines ausgewählten Eingabefeldes nur erfolgt, sofern der Betrag |V(POS(t₁),POS(t₂))| des Verschiebevektors V(POS(t₁),POS(t₂)) einen vorgegebenen Grenzwert überschreitet.

Eine vorteilhafte Weiterbildung der vorgeschlagenen Vorrichtung zeichnet sich dadurch aus, dass das Auswertemittel derart ausgeführt und eingerichtet ist, dass ein Anstieg oder eine Verkleinerung des Betrages |F(t)| des Flächenbereichs F(t) jeweils in vorgegebenen Toleranzzeitbereichen detektiert/ausgewertet wird.

Eine vorteilhafte Weiterbildung der vorgeschlagenen Vorrichtung zeichnet sich dadurch aus, dass der Bildschirm Teil eines Fahrzeugsystems, insbesondere eines Navigationssystems, eines Entertainmentsystems, eines Infotainmentsystems, ein Klimasystems ist.

Eine vorteilhafte Weiterbildung der vorgeschlagenen Vorrichtung zeichnet sich dadurch aus, dass die Eingabefläche der Eingabeschnittstelle im Bereich eines Fahrzeugcockpits, insbesondere an einem Steuerknüppel, an einem Lenkrad oder einem Gangwahlhebel, an einer Mittelkonsole, an einem Anzeigepanel angeordnet ist.

Ein weiterer Aspekt der vorliegenden Erfindung betrifft ein Fahrzeug, insbesondere Kraftfahrzeug, Elektrofahrzeug, Luftfahrzeug, Schienenfahrzeug, Wasserfahrzeug mit einer Vorrichtung, wie vorstehend beschrieben.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: Auswirkung eines abrollenden Fingers auf die berechnete Schwerpunktskoordinate,
- Fig. 1a: Lenkrad mit einem erfindungsgemäßen Vorrichtung
- Fig. 2: Sensordaten einer typischen Eingabe zur Auslösung der Schaltfunktion (ohne Gesteneingabe),
- Fig. 3: Sensordaten für vier valide Swipes ohne Auslösen der Schaltfunktion mit von links nach rechts zunehmender Gesteneingabegeschwindigkeit,
- Fig. 4: Sensordaten einer einzelnen, schnellen Nutzereingabe,
- Fig. 5: Vergleich von Sensordaten für einen langsamen Tastendruck und langsamen Swipe,
- Fig. 6: ein ergonomisch bedingtes monotones Ansteigen der Fingerauflagefläche bei einer Fingerbewegung auf der Eingabefläche nach oben,
- Fig. 7: einen stark schematisierten Ablaufplan eines erfindungsgemäßen Verfahrens, und
- Fig. 8: einen stark schematisierten Aufbau einer erfindungsgemäßen Vorrichtung.

Nachfolgend wird die Erfindung anhand eines Ausführungsbeispiels nochmals eingehend erläutert. In diesem Ausführungsbeispiel sei die Eingabeschnittstelle an einem Lenkrad eines Fahrzeugs, insbesondere eines Pkws, Elektrofahrzeugs oder LKWs angeordnet.

An dem Fahrzeuglenkrad erfolgt eine Detektion von Nutzereingaben durch die Eingabeschnittstelle. Die Eingabeschnittstelle umfasst zur Erfassung von Gesteneingaben eine Eingabefläche (im Folgenden "FNPad" genannt). Die Eingabeschnittstelle ist weiterhin zur Auslösung einer elektrischen Schaltfunktion durch Ausübung einer Mindestkraft auf die Eingabefläche ausgeführt. Zur Erfassung der Gesteneingaben verfügt die Eingabeschnittstelle über ein Array mit einer Vielzahl von kapazitiven Sensorelementen an der Eingabefläche. Die Eingabefläche ist weiterhin mit einem mechanisch bedienbaren elektrischen Schalter verbunden, dessen Schaltfunktion durch Ausübung der Mindestkraft in die Eingabefläche ausgeführt wird.

Mittels des FNPads kann der Nutzer vorliegend Telematikkomponenten (wie bspw. Instrument Cluster, HeadUnit, etc. des Fahrzeugs) mittels Gesteneingaben, d.h. insbesondere "Wischgesten" mit Richtungen "Oben", "Unten", "Rechts", "Links" bedienen. Die Gesteneingaben werden im Folgenden auch als "Swipe" bezeichnet. Das FNPad bietet dem Nutzer zudem die Möglichkeit, durch Ausübung einer Mindestkraft auf die Eingabefläche einen elektrischen Schalter mechanisch zu betätigen und somit eine Schaltfunktion auszulösen (im Folgenden "OK-press" genannt). In den Telematikkomponenten wird diese Eingabe üblicherweise als Tastendruck bzw. Bestätigung interpretiert.

Durch die Belegung derselben Eingabefläche mit zwei Eingabeoptionen ("Swipe" und "OK-press") ergibt sich folgendes Problem.

Beim Betätigen der Schaltfunktion (OK-press) führt die Eingabekraft zu einer Verformung der Auflagefläche des Fingers, d.h. insbesondere zu einer Vergrößerung der Fingerauflagefläche auf der Eingabefläche des FNPads. Die Veränderung der Fingerauflagefläche verschiebt den detektierten Fingerschwerpunkt und damit eine berechnete Fingerposition (dargestellt in kartesischem Koordinatensystem als Tupel (x,y)).

Durch diese Änderung der berechneten Fingerposition wird in den Telematikkomponenten fälschlicherweise eine Fingerbewegung erkannt. Je nach Betrag und Richtung dieser vermeintlichen Bewegung können vom Nutzer nicht beabsichtigte "Swipes" erkannt werden.

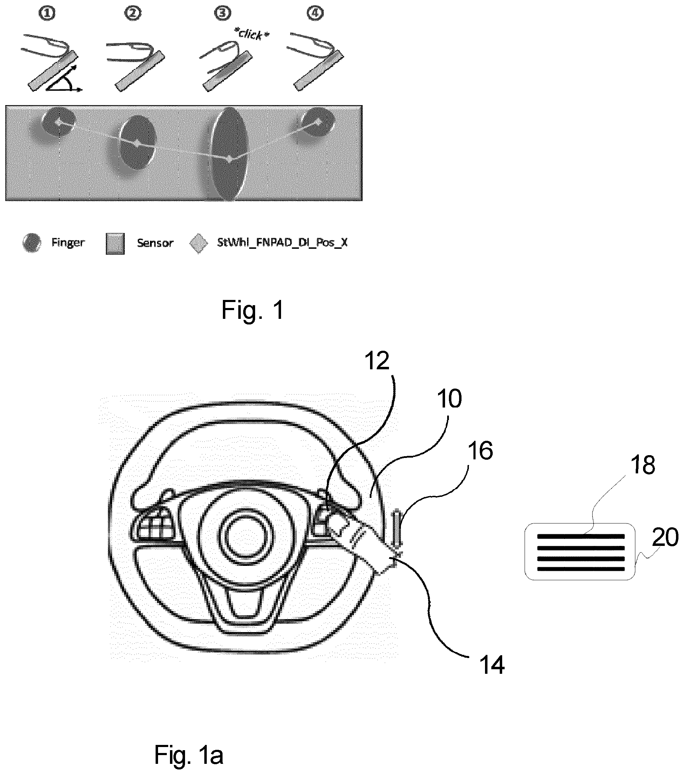

Ein Worst-Case-Szenario dieser Fehlbedienung ist in **Fig. 1** dargestellt.
1) Der Nutzer hat in einem auf dem Bildschirm dargestellten Menü der Telematikkomponenten eine Option durch Positionieren eines Cursors (z.B. in einer Liste) auf einem Eingabefeld angewählt und möchte diese durch Auslösen der Schaltfunktion bestätigen. Hierzu betätigt er mit seinem Finger das FNPad, um die entsprechende Mindestkraft zur Auslösung der Schaltfunktion einzubringen.
2) Das Abrollen des Fingers auf dem FNPad wird jedoch fälschlicherweise als Swipe erkannt und behandelt, so dass es vor dem Auslösen der Schaltfunktion zu einer ungewollten Veränderung der Cursorposition auf dem Bildschirm kommt, wodurch der Cursor auf dem nächstliegenden Listenelement/dem nächstliegenden Eingabefeld positioniert wird.
3) Wenn dieser vermeintliche Swipe unmittelbar vor dem Auslösen der Schaltfunktion erkannt und ausgeführt wird, hat der Nutzer keine Zeit mehr zu reagieren und löst einen "OK-Press" aus. Statt des gewollten Listenelements bestätigt der Nutzer jedoch ungewollt das nächstliegende Listenelement.
4) Beim Abheben des Fingers nimmt die auf da FNPad aufgebrachte Kraft ab und führt dadurch wiederum zu einer Änderung der Fingerauflagefläche. Somit wird wieder eine Änderung der Eingabeposition des Fingers erkannt, üblicherweise in entgegengesetzter Richtung zu 2), die als Swipe interpretiert und umgesetzt wird, wodurch der Cursor wieder auf das ursprünglich (1)) angewählte Listenelement/Eingabefeld platziert wird.

Aus Sicht des Nutzers führt so eine einfache Eingabe zur Auslösung der Schaltfunktion (vergleichbar einem Tastendruck) dazu, dass zunächst ein falsches Eingabefeld ausgewählt und dessen Eingabeinhalt aktiviert wird, bevor der Cursor im Rahmen der selben Eingabe wieder auf das ursprünglich gewollte Eingabefeld springt, ohne es aber zu bestätigen.

In dem Ausführungsbeispiel ist das FNPad mit einer Eingabefläche eines kapazitiven Sensorarrays realisiert. Das Sensorarray sendet alle 20ms ein neues kartesisches Koordinatentupel (x,y). In der Eingabeschnittstelle ist eine Applikation realisiert (im Folgenden "Gestenerkenner" genannt), die aus den Differenzen aufeinanderfolgender Koordinatentupel (x,y) Verschiebevektoren V(POS(t₁), POS(t₂)) ermittelt und diese nach Anwendung verschiedener Filteralgorithmen in Swipes umwandelt und ausführt, womit vorliegend eine Cursorposition auf dem Bildschirm gesteuert wird.

Eine Möglichkeit ist, die Berechnung von Swipes im Gestenerkenner zu stoppen, sobald die Schaltfunktion ausgelöst ist. Da aber die Verformung des Fingers und damit die Änderung der errechneten Fingerposition bereits deutlich vor dem Auslösen der Schaltfunktion beginnt (Größenordnung 200 ms), ist dieser Mechanismus alleine nicht in der Lage, das oben beschriebene Problem zu vermeiden.

Das Einführen einer (statischen bzw. codierbaren) Wartezeit könnte das Ausführen ungewollter Swipes zwar verhindern, würde aber eine vom Nutzer sehr deutlich wahrnehmbare zusätzliche Verzögerung zwischen Bedienaktion und Reaktion des Systems verursachen. Die Folge wäre eine nicht vertretbare Reduktion der Wertanmutung des Gesamtsystems (d.h. die Reaktion des Systems würde als zu langsam/verzögert empfunden).

Jede Lösung muss also geeignet sein:
- ungewollte Swipes zuverlässig zu unterdrücken
- gewollte Swipes nicht spürbar zu verzögern.

Nachfolgend werden zwei Lösungen (A und B) vorgestellt. Für beide Lösungen muss der kapazitive Sensor (Sensorarray) zusätzlich zum Koordinatentupel (x,y) weitere Informationen ausgeben.

### Übersicht Lösung A

Es werden zusätzlich summierte Rohdaten des Sensorarrays ausgegeben, d.h. im Wesentlichen die aufsummierten Rohdaten der einzelnen Zeilen und Spalten des kapazitiven Sensorarrays. Diese Lösung ist vorteilhaft ohne zusätzliche Hardware realisierbar. Allerdings ist die Lösung A wenig robust, da sie bei einer langsamen Gesteneingabe valide, d.h. gewollte Swipes unterdrücken kann.

### Übersicht Lösung B

Zusätzlich zu A) wird eine auf die Eingabefläche ausgeübte Kraft K(t) erfasst und ausgewertet. Hierzu ist einerseits zumindest ein mit der Eingabefläche verbundener Kraftsensor erforderlich, andererseits erlaubt die Berücksichtigung der auf die Eingabefläche ausgeübten Kraft K(t) eine robustere Erkennung und Berücksichtigung, insbesondere langsam eingegebener Swipes.

Im Folgenden wird gezeigt, wie anhand dieser neuen Informationen ein beginnender "OK-Press" im Gestenerkenner erkannt werden kann. Dazu werden verschiedene Aufnahmen beispielhafter Sensordaten gezeigt. Hierfür werden folgende Signale definiert:
- StWhl_FNPAD_DI_Pos_X_ST3: X-Koordinate des Fingerschwerpunkts (Wertebereich: 0-1023)
- StWhl_FNPAD_DI_Pos_Y_ST3: Y-Koordinate des Fingerschwerpunkts (Wertebereich: 0-1023)
- StWhl_FNPAD_DI_Pos_Delta_X: summierte Rohdaten des Sensorarrays (im Folgenden "Flächensignal" genannt). Annahme: Es gibt einen näherungsweise monoton steigenden Zusammenhang zwischen dem Flächensignal und der realen Fingerauflagefläche auf der Eingabefläche.
- StWhl_FNPAD_DI_Pos_Delta_Y: Messwert des Kraftsensors, im Folgenden "Kraftsignal" genannt. Auch hier wird ein monotoner Zusammenhang von aufgebrachter Kraft und Sensormesswert angenommen.

Ziel der Auswertung ist es somit, in einer Nutzereingabe Anhaltspunkte für eine beginnende Eingabe zur Auslösung der Schaltfunktion (oder einfach ausgedrückt: einen beginnenden Tastendruck zur Auslösung der Schaltfunktion) zu erkennen. Dazu wird vorteilhaft ein Boolscher Wert definiert ("SupressGesturePositionEnd"), der bei "TRUE" die Ausgabe von ermittelten Swipes an den Bildschirm unterdrückt. Es wird vorliegend angenommen, dass auch für gewollte Swipes dieser Boolsche Wert zumindest zeitweise "TRUE" sein kann.

Daher ist es wichtig, erkannte Swipes nicht einfach zu verwerfen. Stattdessen werden erkannte Swipes vorteilhaft nur zurückgehalten und in einer Speichereinheit zwischengespeichtert.

Falls der Boolsche Wert von "TRUE" auf "FALSE" springt, während die Nutzereingabe noch nicht abgeschlossen ist, werden die zurückgehaltenen Swipes als valide Eingabe an den Bildschirm ausgegeben.

Falls der Wert von SupressGesturePositionEnd auf "TRUE" bleibt, bis die Nutzereingabe endet (in der Regel durch Auslösen der Schaltfunktion), werden zurückgehaltene/zwischengespeicherte Swipes endgültig verworfen bzw. gelöscht oder anschließend überschrieben.

**Fig. 1a** zeigt ein beispielhaftes Lenkrad 10 mit einer erfindungsgemäßen Vorrichtung umfassend ein Eingabefeld 12, das mit einem Finger 14 einer das Lenkrad steuernden Hand durch Wischbedienungen 16 bedienbar ist. Über die Wischbewegungen 16 kann die Auswahl eines Eingabeinhaltes eines Eingabefelds 18 auf einem Bildschirm 20 erfolgen. Während der Wischbewegung des Fingers 14 ist ein durch Verkippen bedingtes Abrollen des Fingers nicht vermeidbar, so dass die in der Beschreibung zu Fig. 1 ungewollte Funktionsauslösung zustande kommt.

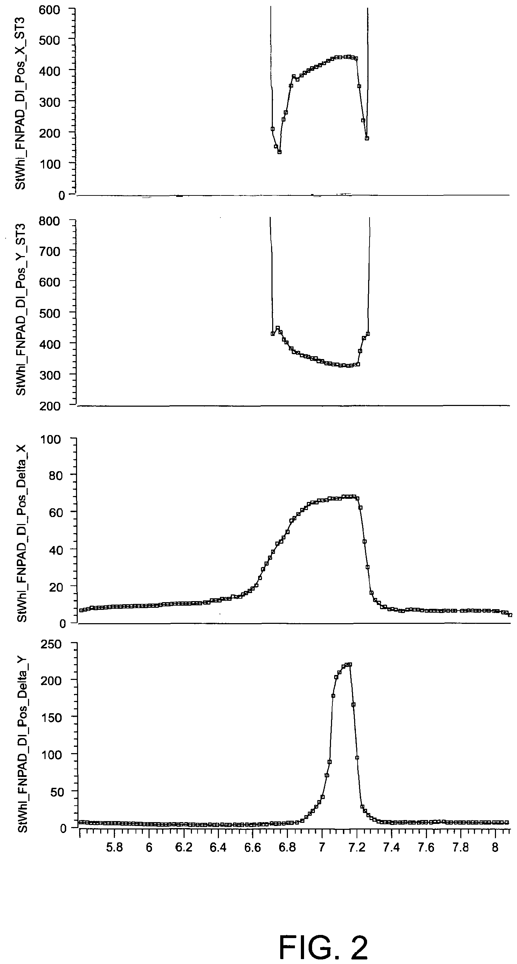

**Fig. 2** zeigt Sensordaten einer typischen Eingabe zur Auslösung der Schaltfunktion (ohne Gesteneingabe). Deutlich zu erkennen ist, dass bereits durch das Annähern des Fingers an die Sensoroberfläche (Eingabefläche) das Flächensignal (drittes Sensorsignal von oben) bereits vor der Ausgabe des ersten validen Koordinatentupels (x,y) (erstes und zweites Sensorsignal von oben) ansteigt und danach für den größten Teil der Eingabe durch das Abrollen des Fingers weiter steigt.

Weiter ist zu erkennen, dass der größte Teil der Koordinatenänderung bereits erfolgt ist, bevor das Kraftsignal (viertes Sensorsignal von oben) anzusteigen beginnt. Im Allgemeinen kann diese Koordinatenänderung bereits fälschlicherweise als Swipe interpretiert und umgesetzt werden. Daher ist das Kraftsignal (alleine) nicht geeignet, um eine beginnende Eingabe zur Auslösung der Schaltfunktion zu erkennen.

Weiterhin ist deutlich eine Koordinatenänderung beim Abheben des Fingers zu erkennen. Diese Koordinatenänderung geht erwartungsgemäß mit einer stark abfallenden Flanke in Kraftsignal und Flächensignal einher.

### Lösungsansatz A -Einfache Lösung

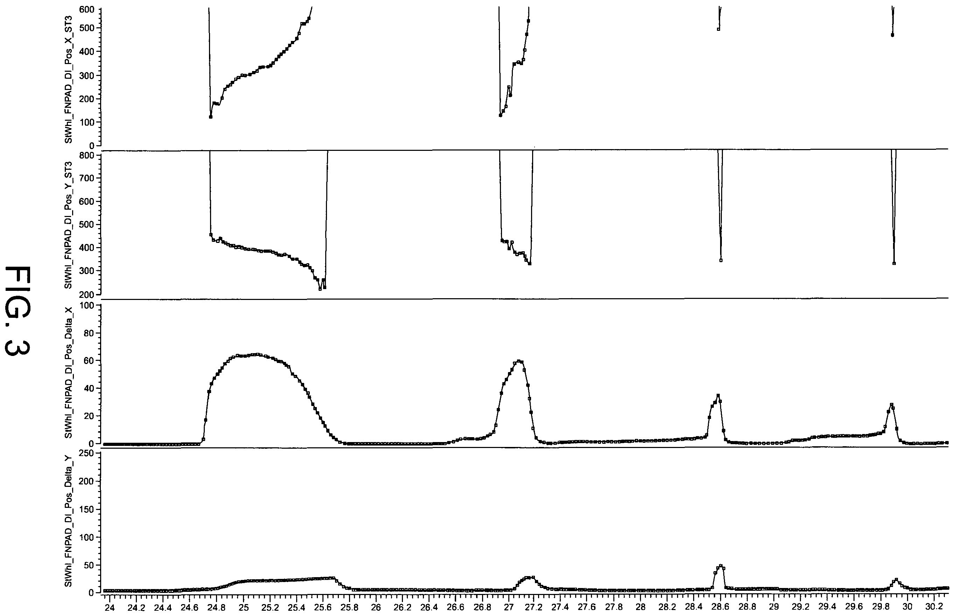

**Fig. 3** zeigt Sensordaten (von oben nach unten: StWhl_FNPAD_DI_Pos_X_ST3, StWhl_FNPAD_DI_Pos_Y_ST3, StWhl_FNPAD_DI_Pos_Delta_X, stwhl_FNPAD_DI_Pos_Delta_Y) für vier valide, gewollte Swipes unterschiedlicher Gesteneingabegeschwindigkeit. Dabei nimmt die Gesteneingabegeschwindigkeit von links nach rechts zu. Bei allen Swipes fällt auf, dass das jeweilige Sensorsignal ab etwa der Mitte der Nutzereingabe zu Fallen beginnt, während es in Fig. 2 über die gesamte Dauer der Bedienung monoton ansteigt bis zu dem Zeitpunkt, an dem die Schaltfunktion ausgelöst wird. Da ab diesem Zeitpunkt Swipes vorteilhaft ohnehin verworfen werden, scheint das Ansteigen des Flächensignals ein hinreichendes Kriterium für SupressGesturePositionEnd = "TRUE" zu sein. Ein fallendes Flächensignal scheint ein hinreichendes Kriterium für SupressGesturePositionEnd = "FALSE" zu sein.

Bei der ersten und langsamsten Wischbewegung (ganz links) in Fig. 3 fällt auf, dass das Flächensignal für etwa 500 ms ansteigt, bevor es abzusinken beginnt. Dieses Verhalten ist typisch für langsame Swipes und eher untypisch für Eingaben zur Auslösung der Schaltfunktion. Um einen langsam ausgeführten Swipe nicht unnötig zu verzögern, wird vorteilhaft eine Maximaldauer für SupressGesturePositionEnd = "TRUE" definiert, die ausreicht, um die meisten Eingaben zur Auslösung der Schaltfunktion abzufangen und langsame Gesteneingaben durchzulassen. An dieser Stelle wird zunächst akzeptiert, dass es dadurch im Grenzbereich zu einigen "False-Positives" und "False-Negatives" kommen kann. Eine noch robustere Bestimmung von SupressGesturePositionEnd wird nachfolgend unter Lösung B beschrieben.

Weiter fällt auf, dass das Flächensignal hier zwar monoton, aber nicht streng monoton ansteigt. Im Allgemeinen kann durch Signalrauschen sogar ein kurzzeitiger Rückgang innerhalb der steigenden Flanke kommen. Daher wird vorteilhaft ein zeitlicher Toleranzbereich definiert, in dem ein Ansteigen eines jeweiligen Signals detektiert wird.

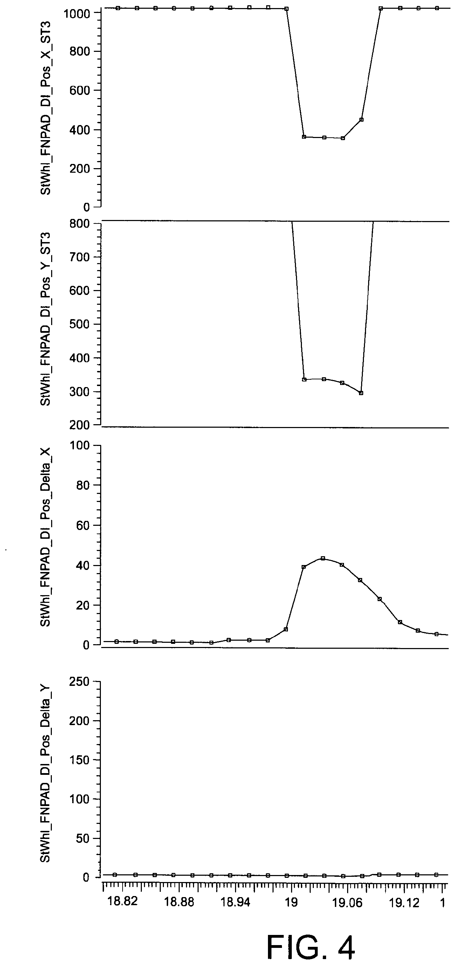

Wird dieser Toleranzbereich allerdings zu groß gewählt, können einzelne schnelle Eingaben fälschlicherweise verworfen werden. In **Fig. 4** sind Sensordaten für eine schnell ausgeführte, nur aus vier Koordinatentupeln (x,y) bestehende Eingabe gezeigt. Der größte Verschiebevektor V(POS(t₁), POS(t₂)), der hier auch einen Swipe verursacht, wird durch die letzten beiden Koordinatentupel: POS(t₁), POS(t₂) ermittelt. Zu diesem Zeitpunkt sinkt das Flächensignal erst seit 2 Signalzyklen. Würde der Toleranzbereich hier mit 3 oder mehr Zyklen definiert, wäre der Wert für SupressGesturePositionEnd während der gesamten Nutzereingabe "TRUE" und der gewollte, eigentlich valide Swipe würde verworfen. Im Ergebnis würde der Nutzer keine Reaktion auf seine Eingabe merken und das Gesteneingabesystem als unzuverlässig empfinden.

Zuletzt muss noch der Zeitraum nach dem Auslösen der Schaltfunktion und dem sich anschließenden Abheben des Fingers von der Eingabefläche betrachtet werden. Der Zeitpunkt des Auslösens der Schaltfunktion lässt sich durch ein Boolsches Eingangssignal des Gestenerkenners (Mechanical Button Status: "TRUE" = gedrückt, "FALSE" = gelöst) genau bestimmen und muss nicht über Umwege und Hilfssignale bestimmt werden. Hier reicht es, alle Swipes die innerhalb einer zu definierenden Dauer nach dem Auslösen der Schaltfunktion detektiert werden zu verwerfen. Die Dauer ist so zu wählen, dass ungewollte Gesteneingaben abgefangen werden, gewollte Gesteneingaben aber nicht unterdrückt bzw. verworfen werden. Dieser Zeitraum liegt vorteilhaft in der Größenordnung von 100 - 300 ms, insbesondere bei 200 ms.

Aus diesen Betrachtungen ergibt sich folgender Algorithmus zur Berechnung von SupressGesturePositionEnd, der bei jedem neuen Signalzyklus oder Zeitschritt durchlaufen wird:
int D_OKpress_Detection_Sensitivity
int D_Max_Suspend_Cycles
int D_OKpress_DeadTime

Betrachte den Zeitraum der letzten D_OKpress_Detection_Sensitivity Werte des Flächensignals.

Falls das Flächensignal innerhalb dieses Zeitraums mindestens einmal angestiegen ist, setze SupressGesturePositionEnd = "TRUE" sonst setze SupressGesturePositionEnd = "FALSE"

Falls seit dem ersten (bezogen auf eine aktuelle Gesteneingabe) Setzen* von SupressGesturePositionEnd = "TRUE" mindestens D_Max_Suspend_Cycles Signalzyklen vergangen sind, setze SupressGesturePositionEnd = "FALSE"

Falls die Schaltfunktion innerhalb der letzten D_OKpress_DeadTime Signalzyklen ausgelöst wurde, verwerfe und lösche alle detektierten Swipes

Dabei gilt:
D_OKpress_Detection_Sensitivity := Anzahl der vergangenen Signalzyklen, die zur Betrachtung herangezogen werden. Je höher dieser Wert, desto sensitiver der Filter, aber auch desto höher die Rate an False Positives.
D_Max_Suspend_Cycles := maximale Anzahl an Signalzyklen/Zeitschritte i, für die SupressGesturePositionEnd auf dem Wert "FALSE" gehalten werden darf.
D_OKpress_DeadTime := Anzahl der Signalzyklen/Zeitschritte i, für die nach dem Auslösen der Schaltfunktion die Ausgabe von Swipes unterdrückt wird.
*Alternative Variante: Falls seit dem letzten (bezogen auf eine aktuelle Gesteneingabe) Setzen von SupressGesturePositionEnd = "TRUE" ... Dadurch wird vorzugsweise u.a. bei Fluktuationen des Flächensignals ein Timer neu gestartet.

Wie oben bereits erwähnt, ist es vorteilhaft bei der Wahl des Zeitfensters D_Max_Suspend_Cycles folgende Abwägung zu treffen:
- Ist das Zeitfenster zu lange, werden langsame Swipes erheblich verzögert. Als Ergebnis wird das Gesamtsystem vom Nutzer als träge und wenig performant empfunden.
- Ist das Zeitfenster zu kurz, können langsame Eingaben d.h. Tastendrücke und/oder swipes nicht erkannt werden. Als Ergebnis bleibt die eingangs erwähnte Fehlbedienung bestehen und das Gesamtsystem wird vom Nutzer als unzuverlässig empfunden.

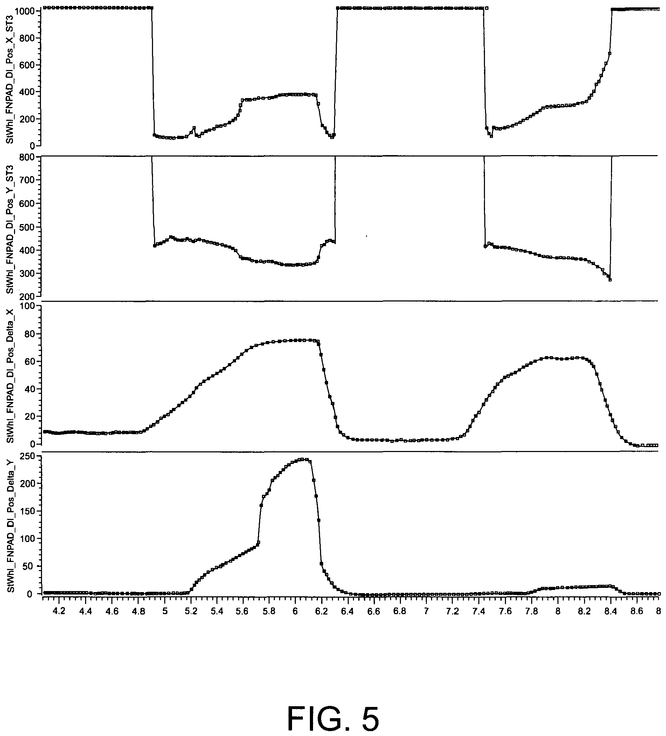

**Fig. 5** **veranschaulicht** dieses Problem. Fig. 5 zeigt hierzu Sensordaten (von oben nach unten: StWhl_FNPAD_DI_Pos_X_ST3, StWhl_FNPAD_DI_Pos_Y_ST3, StWhl_FNPAD_DI_Pos_Delta_X, StWhl_FNPAD_DI_Pos_Delta_Y) für eine langsame Auslösung der Schaltfunktion (jeweils linkes Ereignis) gefolgt von einer langsamen Gesteneingabe/Swipeingabe (jeweils rechtes Ereignis). Beide Fälle sind valide und real vorkommende Bedienbilder. In beiden Fällen dauert es deutlich über 600 ms bis das Flächensignal nicht weiter ansteigt.

### Lösungsansatz B - Einbeziehen eines Kraftsensors

In Fig. 5 lässt sich erkennen, dass das Kraftsignal StWhl_FNPAD_DI_Pos_Delta_Y (= K(t)) bei einer beginnenden Eingabe zur Auslösung der Schaltfunktion deutlich vor der Sättigung des Flächensignals zu steigen beginnt (linkes Ereignis). Zwar lässt sich auch für den Swipe (rechtes Ereignis) ein gewisser Anstieg des Flächensignals erkennen, beim linken Ereignis ist dieser allerdings wesentlich stärker.

Im Folgenden wird vorteilhaft angenommen, dass es einen Schwellwert für die Steigung des Kraftsignals K(t) gibt, die bei einer Eingabe zur Auslösung der Schaltfunktion durchgängig und bei einer Eingabe eines Swipe nicht (oder nicht durchgängig) überschritten wird. Man kann nun das durch D_Max_suspend_Cycles definierte Zeitfenster deutlich reduzieren, wenn der für den Lösungsansatz A skizzierte Algorithmus wie folgt geändert wird:
int D_OKpress_Detection_Sensitivity
int D_Max_Suspend_Cycles
int D_OKpress_DeadTime
int D_ForceGradient_Threshold

Betrachte den Zeitraum der letzten D_OKpress_Detection_Sensitivity Werte des Flächensignals.

Falls das Flächensignal innerhalb dieses Zeitraums mindestens einmal angestiegen ist, setze SupressGesturePositionEnd = "TRUE" sonst setze SupressGesturePositionEnd = "FALSE"

Falls seit dem ersten (bezogen auf eine aktuelle Gesteneingabe) Setzen* von SupressGesturePositionEnd = "TRUE" mindestens D_Max_Suspend_Cycles Signalzyklen vergangen sind und das Kraftsignal im letzten Signalzyklus nicht um mindestens D_ForceGradient_Threshold gestiegen ist, setze SupressGesturePositionEnd = "FALSE"

Falls die Schaltfunktion innerhalb der letzten D_OKpress_DeadTime Signalzyklen ausgelöst wurde, verwerfe und lösche alle detektierten Swipes.

Dabei gilt:
D_OKpress_Detection_Sensitivity := Anzahl der vergangenen Signalzyklen, die zur Betrachtung herangezogen werden. Je höher dieser Wert, desto sensitiver der Filter, aber auch desto höher die Rate an "False-Positives".
D_Max_Suspend_Cycles := maximale Anzahl an Signalzyklen, für die SupressGesturePositionEnd auf dem Wert "FALSE" gehalten werden darf.
D_OKpress_DeadTime := Anzahl der Signalzyklen, für die nach dem Auslösen der Schaltfunktion die Ausgabe von Swipes unterdrückt wird.
int D_ForceGradient_Threshold := Mindestwert, um den der Wert des Kraftsignals steigen muss, damit die Filterung auch nach Ablauf der durch D_Max_Suspend_Cycles definierten Zeit aktiv bleibt.
*Alternative Variante: Falls seit dem letzten (bezogen auf eine aktuelle Gesteneingabe) Setzen von SupressGesturePositionEnd = "TRUE" ... Dadurch wird vorzugsweise u.a. bei Fluktuationen des Flächensignals ein Timer neu gestartet.

Ebenso wie das Flächensignal ist auch das Kraftsignal im Allgemeinen einem Signalrauschen unterworfen und daher selbst bei einer beginnenden Eingabe zur Auslösung der Schaltfunktion nicht streng monoton steigend. Ähnlich der Verwendung von OK-press_Detection_Sensitivity ließe sich hier ein Toleranzbereich definieren, mit denselben Vor- und Nachteilen. Da das Kaftsignal in unserem Ausführungsbeispiel von höherer Zuverlässigkeit als das Flächensignal ist, ist eine Begrenzung auf maximal 2 Signalzyklen/Zeitschritte i ausreichend.

Wie in den Ausführungen zum Lösungsansatz A beschrieben, wurde bislang vorausgesetzt, dass das Flächensignal gegen Ende einer gewollten Fingerbewegung abnimmt und deshalb bei monoton steigendem Verlauf des Flächensignals von einer Eingabe zur Auslösung der Schaltfunktion und nicht von einer Gesteneingabe auszugehen ist.

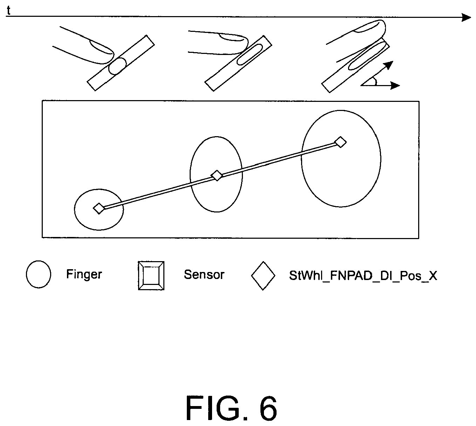

Wie in **Fig. 6** gezeigt, ist dies leider nicht immer der Fall, insbesondere bei Fingereingaben auf der Eingabefläche nach oben wird häufig nicht der Finger als Ganzes bewegt, sondern lediglich aus dem Daumenendgelenk gestreckt. Dies führt unter Umständen dazu, dass die Fingerauflagefläche über die komplette Bewegungsdauer monoton anwächst. Als Folge erkennen beide oben vorgestellten Lösungen ein "False-Positive", d.h. der gewollte, valide Swipe wird fälschlicherweise als beginnende Eingabe zum Auslösen der Schaltfunktion interpretiert und verworfen. Dieses Problem wird vorzugsweise wie folgt gelöst.

Probandenversuche zeigen, dass unbeabsichtigte Swipes in der Anfangsphase der Eingabebewegung meistens nach unten, seltener in horizontaler Richtung und praktisch nie nach oben ausgeführt werden. Daher lassen sich "False-Positives" bei Gesteneingaben nach oben einfach dadurch vermeiden, dass die Filterung für diese Richtung deaktiviert wird.

Ob die Filterung auch für horizontale Swipes aktiv sein soll oder nicht, hängt vom jeweiligen Anwendungsfall ab. Hier sind weiterführende Untersuchungen notwendig, um die Vor- und Nachteile gegeneinander abzuwiegen. Vorteilhaft ist die Filterung für einzelne Eingaberichtungen frei wählbar.

Hierzu wird die Richtung der Fingerbewegung entsprechend folgender Enumeration klassifiziert:
enumGESTURE {Undefined, Up, Down, Left, Right}

Für jede der Richtungen Up, Down, Left, Right kann nun über einen Boolschen Wert konfiguriert werden, ob die Filterung aktiv sein soll oder nicht.

Die oben beschriebenen Lösungsansätze A und B werden damit vorteilhaft um folgende Bedingung erweitert:
GESTURE GestureDirection
Bool FilterUp
Bool FilterDown
Bool FilterLeft
Bool FilterRight
Wenn
(GestureDirection == Up && FilterUp == FALSE) oder
(GestureDirection == Down && FilterDown == FALSE) oder
(GestureDirection == Left && FilterLeft == FALSE) oder
(GestureDirection == Right && FilterRight == FALSE) dann
Setze SupressGesturePositionEnd = FALSE

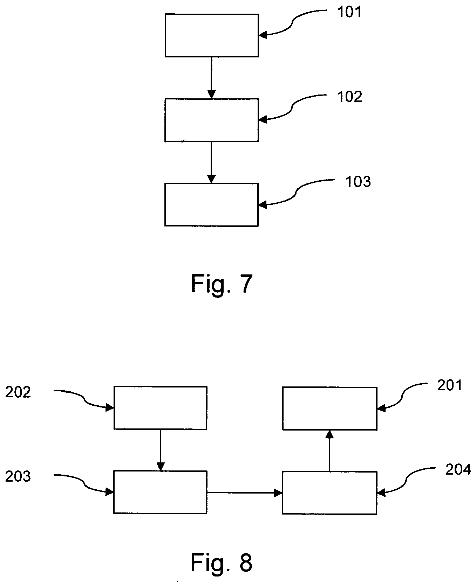

**Fig. 7** zeigt einen stark schematisierten Ablaufplan eines erfindungsgemäßen Verfahrens zur Auswahl von auf einem Bildschirm angezeigten Eingabefeldern und/oder zur Aktivierung von auf dem Bildschirm in einem ausgewählten Eingabefeld angezeigten Eingabeinhalten durch manuelle Eingaben in eine Eingabefläche einer Eingabeschnittstelle, wobei die Eingabeschnittstelle zur haptischen Gesteneingabe in die Eingabefläche, um die Auswahl eines Eingabefelds zu steuern, und zur Aktivierung eines Eingabeinhalts eines ausgewählten Eingabefeldes durch Auslösen einer elektrischen Schaltfunktion der Eingabeschnittstelle mittels Ausüben einer vorgegebenen Mindestkraft auf die Eingabefläche, ausgeführt ist. Das Verfahren umfasst folgende Schritte. In einem ersten Schritt 101 erfolgt ein Ermitteln eines Verschiebevektors V(POS(t₁),POS(t₂)) aus ermittelten Eingabepositionen POS(t₁),POS(t₂) einer manuellen kontinuierlichen Gesteneingabe in die Eingabefläche zu einem ersten Zeitpunkt t₁ und einem zweiten Zeitpunkt t₂, mit t:= Zeit und t₁ < t₂. In einem weiteren Schritt **102** erfolgt ein Ermitteln eines Betrages |F(t)| eines Flächenbereichs F(t), mit dem die manuelle Gesteneingabe auf die Eingabefläche einwirkt. In einem weiteren Schritt **103** erfolgt sofern gilt: |F(t₂)| < |F(t₁)|: ein Auswählen des in Richtung des Verschiebevektors V(POS(t₁),POS(t₂)) von einer zur Position POS(t₁) auf dem Bildschirm zugeordneten Position POS_{SCREEN}(POS(t₁)) aus gesehen nächstliegenden Eingabefeldes.

**Fig. 8** zeigt einen stark schematisierten Aufbau einer erfindungsgemäßen Vorrichtung. Vorrichtung zur Auswahl von auf einem Bildschirm **201** angezeigten Eingabefeldern und/oder zur Aktivierung von auf dem Bildschirm in einem ausgewählten Eingabefeld angezeigten Eingabeinhalten durch manuelle Eingaben in eine Eingabefläche einer Eingabeschnittstelle **202,** wobei die Eingabeschnittstelle **202** zur haptischen Gesteneingabe in die Eingabefläche, um die Auswahl eines Eingabefelds zu steuern, und zur Aktivierung eines Eingabeinhalts eines ausgewählten Eingabefeldes durch Auslösen einer elektrischen Schaltfunktion der Eingabeschnittstelle **202** mittels Ausüben einer vorgegebenen Mindestkraft auf die Eingabefläche, ausgeführt und eingerichtet ist.

Die Vorrichtung umfasst ein Auswertemittel **203**, das zum Ermitteln eines Verschiebevektors V(POS(t₁),POS(t₂)) aus ermittelten Eingabepositionen POS(t₁),POS(t₂) einer manuellen kontinuierlichen Gesteneingabe in die Eingabefläche zu einem ersten Zeitpunkt t₁ und einem zweiten Zeitpunkt t₂, mit t:= Zeit und t₁ < t₂; und weiterhin zum Ermitteln eines Betrages |F(t)| eines Flächenbereichs F(t), mit dem die manuelle Gesteneingabe auf die Eingabefläche einwirkt, ausgeführt und eingerichtet ist.

Die Vorrichtung umfasst weiterhin ein Steuermittel **204,** das derart ausgeführt und eingerichtet ist, dass sofern gilt: |F(t₂)| < |F(t₁)|, ein Auswählen des in Richtung des Verschiebevektors V(POS(t₁),POS(t₂)) von einer zur Position POS(t₁) auf dem Bildschirm zugeordneten Position POS_{SCREEN}(POS(t₁)) aus gesehen nächstliegenden Eingabefeldes erfolgt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Verfahren zur Auswahl von auf einem Bildschirm angezeigten Eingabefeldern und zur Aktivierung von auf dem Bildschirm in einem ausgewählten Eingabefeld angezeigten Eingabeinhalten durch manuelle Eingaben in eine Eingabefläche einer Eingabeschnittstelle, wobei die Eingabeschnittstelle zur haptischen Gesteneingabe in die Eingabefläche, um die Auswahl eines Eingabefelds zu steuern, und zur Aktivierung eines Eingabeinhalts eines ausgewählten Eingabefeldes durch Auslösen einer elektrischen Schaltfunktion der Eingabeschnittstelle mittels Ausüben einer vorgegebenen Mindestkraft auf die Eingabefläche, ausgeführt ist, mit folgenden Schritten:
- Ermitteln (101) eines Verschiebevektors V(POS(t₁),POS(t₂)) aus ermittelten Eingabepositionen POS(t₁),POS(t₂) einer manuellen kontinuierlichen Gesteneingabe in die Eingabefläche zu einem ersten Zeitpunkt t₁ und einem zweiten Zeitpunkt t₂, mit t:= Zeit und t₁ < t₂;
**gekennzeichnet durch**,
- Ermitteln (102) eines Betrages |F(t)| eines Flächenbereichs F(t), mit dem die manuelle Gesteneingabe auf die Eingabefläche einwirkt; und
- sofern gilt |F(t₂)| < |F(t₁)|, ein Auswählen (103) des in Richtung des Verschiebevektors V(POS(t₁),POS(t₂)) von einer zur Position POS(t₁) auf dem Bildschirm zugeordneten Position POS_{SCREEN}(POS(t₁)) aus gesehen nebengeordneten oder zumindest nächstliegenden Eingabefeldes erfolgt, , wobei bei Auslösung der elektrischen Schaltfunktion zum Zeitpunkt t₂ eine dem Eingabeinhalt dieses Eingabefeldes zugeordnete Funktion aktiviert wird und
- sofern gilt (|F(t₂)| > |F(t₁)|) der Verschiebevektor V(POS(t₁),POS(t₂)) verworfen und die der Position POS_{SCREEN}(POS(t₁)) zugeordnete Funktion aktiviert wird, wobei die vorhergehenden Verfahrensschritte nur für eine oder mehrere vorgegebene Richtungen des Verschiebevektors V(POS(t1), POS(t2)) durchgeführt werden.

2. Verfahren nach Anspruch 1,
bei dem für den Fall, dass ausgehend vom ersten Zeitpunkt t₁ eine Vergrößerung des Betrages |F(t)| für eine vorgegebene Zeitdauer Δt_{MAX} erfolgt, für den als Ende der Zeitdauer Δt_{MAX} definierten zweiten Zeitpunkt t₂ = t₁ + Δt_{MAX} der Verschiebevektor V(POS(t₁),POS(t₂)) ermittelt wird und das in Richtung des Verschiebevektors V(POS(t₁),POS(t₂)) von einer zur Position POS(t₁) auf dem Bildschirm zugeordneten Position POS_{SCREEN}(POS(t₁)) aus gesehen nebengeordneten oder zumindest nächstliegenden Eingabefeldes ausgewählt wird.

3. Verfahren nach Anspruch 1 oder 2,
bei dem das auf dem Bildschirm von der Position POS_{SCREEN}(POS(t₁)) aus gesehen nebengeordneten oder zumindest nächstliegende Eingabefeld nur ausgewählt wird, wenn ein während der Gesteneingabe auf die Eingabefläche wirkender Kraftverlauf K(t) im Zeitraum t₁ bis t₂ jeweils Gradienten grad (K(t)) unterhalb eines vorgegebenen Gradienten GRAD aufweist: grad (K(t)) < GRADK.

4. Verfahren nach einem der Ansprüche 1 bis 3,
bei dem im Fall, dass sich nach dem ersten Zeitpunkt t₁ der Betrag |F(t)| bis zum Auslösen der elektrischen Schaltfunktion vergrößert, mit dem Auslösen der Schaltfunktion das zum ersten Zeitpunkt t₁ auf dem Bildschirm ausgewählte Eingabefeld ausgewählt und der Eingabeinhalt dieses Eingabefeldes aktiviert wird.

5. Verfahren nach einem der Ansprüche 1 bis 4,
bei dem nach dem Auslösen der Schaltfunktion für einen vorgegebenen Zeitraum Δt_{SCHALT} ermittelte Verschiebevektoren V(POS(t₁),POS(t₂)) zur Auswahl eines Eingabefeldes verworfen werden.

6. Verfahren nach einem der Ansprüche 1 bis 5,
bei dem eine Auswahl eines Eingabefeldes und/oder die Aktivierung eines Eingabeinhalts eines ausgewählten Eingabefeldes nur erfolgt, sofern der Betrag |V(POS(t₁),POS(t₂))| des Verschiebevektors V(POS(t₁),POS(t₂)) einen vorgegebenen Grenzwert überschreitet.

7. Verfahren nach einem der Ansprüche 1 bis 6,
bei dem ein Anstieg oder eine Verkleinerung des Betrages |F(t)| des Flächenbereichs F(t) jeweils in vorgegebenen Toleranzzeitbereichen detektiert/ausgewertet wird.

8. Vorrichtung zur Auswahl von auf einem Bildschirm (201) angezeigten Eingabefeldern und zur Aktivierung von auf dem Bildschirm in einem ausgewählten Eingabefeld angezeigten Eingabeinhalten durch manuelle Eingaben in eine Eingabefläche einer Eingabeschnittstelle (202), wobei die Eingabeschnittstelle zur haptischen Gesteneingabe in die Eingabefläche, um die Auswahl eines Eingabefelds zu steuern, und zur Aktivierung eines Eingabeinhalts eines ausgewählten Eingabefeldes durch Auslösen einer elektrischen Schaltfunktion der Eingabeschnittstelle mittels Ausüben einer vorgegebenen Mindestkraft auf die Eingabefläche, ausgeführt und eingerichtet ist, umfassend:
- ein Auswertemittel (203), das zum Ermitteln eines Verschiebevektors V(POS(t₁),POS(t₂)) aus ermittelten Eingabepositionen POS(t₁),POS(t₂) einer manuellen kontinuierlichen Gesteneingabe in die Eingabefläche zu einem ersten Zeitpunkt t₁ und einem zweiten Zeitpunkt t₂, mit t:= Zeit und t₁ < t₂ eingerichtet ist;
**dadurch gekennzeichnet, dass**
- das Auswertemittel (203) weiterhin zum Ermitteln eines Betrages |F(t)| eines Flächenbereichs F(t), mit dem die manuelle Gesteneingabe auf die Eingabefläche einwirkt, ausgeführt und eingerichtet ist, und
ein Steuermittel (204), das derart für vorgegebene Richtungen des Verschiebevektors V(POS(t₁), POS(t₂)) ausgeführt und eingerichtet ist, dass sofern gilt |F(t₂)| < |F(t₁)|, ein Auswählen des in Richtung des Verschiebevektors V(POS(t₁),POS(t₂)) von einer zur Position POS(t₁) auf dem Bildschirm zugeordneten Position POS_{SCREEN}(POS(t₁)) aus gesehen nebengeordneten oder zumindest nächstliegenden Eingabefeldes und eine Aktivierung bei Auslösung der elektrischen Schaltfunktion eine dem Eingabeinhalt des Eingabefeldes zugeordnete Funktion erfolgt und sofern gilt (|F(t₂)| > |F(t₁)|) der Verschiebevektor V(POS(t₁),POS(t₂)) verworfen und bei Auslösung der elektrischen Schaltfunktion eine Aktivierung die der Position POS_{SCREEN}(POS(t₁)) zugeordneten Funktion erfolgt, wobei die vorhergehenden Verfahrensschritte nur für eine oder mehrere vorgegebene Richtungen des Verschiebevektors V(POS(t1), POS(t2)) durchgeführt werden.

9. Lenkrad eines Kraftfahrzeugs mit einer Vorrichtung gemäß Anspruch 8.

## Claims

1. Method for selecting input fields displayed on a screen and for activating input contents displayed in a selected input field on the screen by means of manual input into an input surface of an input interface, wherein the input interface is designed for haptic gesture input into the input surface in order to control the selection of an input field and for activating an input content of a selected input field by triggering an electric switching function of the input interface by means of applying a predetermined minimum force to the input surface, the method comprising the following steps:
- determining (101) a displacement vector V(POS(t₁),POS(t₂)) from determined input positions (POS(t₁),POS(t₂) of a manual continuous gesture input into the input surface at a first point in time t₁ and a second point in time t₂, with t:= time and t₁ < t₂;
**characterised by**
- determining (102) an amount | F(t) | of a surface area F(t) with which the manual gesture input acts on the input surface; and
- if | F(t₂) | < | F(t₁) | , a selection of the input field which is coordinated or at least closest in the direction of the displacement vector V(POS(t₁),POS(t₂)) as viewed from a position POS_{SCREEN}(POS(t₁)) assigned to the position (POS(t₁) on the screen, wherein, if the electric switching function is triggered at t₂, a function assigned to the input content of said input field is activated, and
- if | F(t₂) | > | F(t₁) | , the displacement vector V(POS(t₁),POS(t₂)) is discarded and the function assigned to the position POS_{SCREEN}(POS(t₁)) is activated,
wherein the preceding procedural steps are only executed for one or several predetermined direction(s) of the displacement vector V(POS(t₁),POS(t₂)).

2. Method according to claim 1,
in which, if the amount | F(t₁) | increases from the first point in time t₁ for a predetermined duration Δtₘₐₓ, the displacement vector V(POS(t₁),POS(t₂)) is determined for the second point in time t₂ = t₁ + Δtₘₐₓ, which is defined as the end of the duration Δtₘₐₓ, and the input field which is coordinated or at least closest in the direction of the displacement vector V(POS(t₁),POS(t₂)) as viewed from a position POS_{SCREEN}(POS(t₁)) assigned to the position (POS(t₁) on the screen is selected.

3. Method according to claim 1 or 2,
in which the input field which is coordinated or at least closest as viewed from the position POS_{SCREEN}(POS(t₁) on the screen is only selected if a force path K(t) acting on the input surface during the gesture input in the period t₁ to t₂ has a gradient (K(t)) below a predetermined gradient GRAD: grad (K(t)) < GRADK.

4. Method according to any of claims 1 to 4,
in which, if the amount | F(t₁) | increases after the first point in time t₁ up to the triggering of the electric switching function, the input field selected at the first point in time t₁ on the screen is selected at a triggering of the switching function and the input content of said input field is activated.

5. Method according to any of claims 1 to 4,
in which, after the triggering of the switching function, displacement vectors V(POS(t₁),POS(t₂)) determined for a predetermined period Δt_{SCHALT} are discarded for selecting an input field.

6. Method according to any of claims 1 to 5,
in which a selection of an input field and/or the activation of an input content occur(s) only if the amount | V(POS(t₁),POS(t₂)) | of the displacement vector V(POS(t₁),POS(t₂)) exceeds a predetermined limit value.

7. Method according to any of claims 1 to 6,
in which an increase or a reduction of the amount | F(t₁) | of the area F(t) is in each case detected/evaluated in predetermined tolerance ranges.

8. Device for selecting input fields displayed on a screen (201) and for activating input contents displayed in a selected input field on the screen by means of manual input into an input surface of an input interface (202), wherein the input interface is designed and arranged for haptic gesture input into the input surface in order to control the selection of an input field and for activating an input content of a selected input field by triggering an electric switching function of the input interface by means of applying a predetermined minimum force to the input surface, the device comprising:
- an evaluation means (203) arranged for determining a displacement vector V(POS(t₁),POS(t₂)) from determined input positions (POS(t₁),POS(t₂) of a manual continuous gesture input into the input surface at a first point in time t₁ and a second point in time t₂, with t:= time and t₁ < t₂;
**characterised in that**
- the evaluation means (203) is furthermore designed and arranged for determining an amount | F(t) | of a surface area F(t) with which the manual gesture input acts on the input surface, and
a control means (204) is designed and arranged for predetermined directions of the displacement vector V(POS(t₁),POS(t₂)) in such a way that, if | F(t₂) | < | F(t₁) | , there is a selection of the input field which is coordinated or at least closest in the direction of the displacement vector V(POS(t₁),POS(t₂)) as viewed from a position POS_{SCREEN}(POS(t₁)) assigned to the position (POS(t₁) on the screen, and. at a triggering of the electric switching function, an activation of a function assigned to the input content of the input field, and if | F(t₂) | > | F(t₁) | , the displacement vector V(POS(t₁),POS(t₂)) is discarded and, at a triggering of the electric switching function, there is an activation of the function assigned to the position POS_{SCREEN}(POS(t₁)), wherein the preceding procedural steps are only executeded for one or several predetermined direction(s) of the displacement vector V(POS(t₁),POS(t₂)).

9. Steering wheel of a motor vehicle with a device according to claim 8.

## Revendications

1. Procédé permettant de sélectionner des champs d'entrée affichés sur un écran et permettant d'activer des contenus d'entrée affichés sur l'écran dans un champ d'entrée sélectionné par entrées manuelles dans une surface d'entrée d'une interface d'entrée, dans lequel l'interface d'entrée est conçue pour l'entrée haptique de gestes dans la surface d'entrée, pour commander la sélection d'un champ d'entrée, et pour activer un contenu d'entrée d'un champ d'entrée sélectionné par déclenchement d'une fonction de commutation électrique de l'interface d'entrée par application d'une force minimum prédéfinie sur la surface d'entrée, le procédé comprenant les étapes suivantes consistant à :
- déterminer (101) un vecteur de déplacement V(POS(t₁), POS(t₂)) à partir des positions d'entrée déterminées POS(t₁), POS(t₂) d'une entrée manuelle continue de gestes dans la surface d'entrée à un premier point temporel t₁ et à un second point temporel t₂, t : = temps et t₁ < t₂ ;
**caractérisé par**
- la détermination (102) d'une valeur | F(t) | d'une zone de surface F(t), avec laquelle l'entrée manuelle de gestes agit sur la surface d'entrée ; et
- s'il est estimé que | F(t₂) | < | F(t₁) | , la sélection (103) du champ d'entrée adjacent ou au moins le plus proche dans la direction du vecteur de déplacement V(POS(t₁), POS(t₂)) tel qu'il est vu à partir à partir d'une position POS_{SCREEN}(POS(t₁)), associée à la position POS(t₁) sur l'écran,
- lors du déclenchement de la fonction de commutation électrique au point temporel t₂, l'activation d'une fonction associée au contenu d'entrée de ce champ d'entrée et
- s'il est estimé que | F(t₂) | > | F(t₁) | , le rejet du vecteur de déplacement V(POS(t₁), POS(t₂)) et l'activation de la fonction associée à la position POS_{SCREEN}(POS(t₁)),
dans lequel les étapes de procédé précédentes sont exécutées uniquement pour une ou plusieurs directions prédéfinies du vecteur de déplacement V(POS(t₁), POS(t₂)).

2. Procédé selon la revendication 1, dans lequel, pour le cas où à partir du premier point temporel t₁ une augmentation de la valeur | F(t) | a lieu pour une durée temporelle prédéfinie Δt_{MAX}, pour le second point temporel t₂ = t₁ + Δt_{MAX} défini comme étant la fin de la durée temporelle Δt_{MAX} le vecteur de déplacement V(POS(t₁), POS(t₂)) est déterminé et le champ d'entrée adjacent ou au moins le plus proche dans la direction du vecteur de déplacement V(POS(t₁), POS(t₂)) tel qu'il est vu à partir de la position POS_{SCREEN}(POS(t₁)), associée à la position POS(t₁) sur l'écran.

3. Procédé selon la revendication 1 ou 2, dans lequel le champ d'entrée adjacent ou au moins le plus proche tel qu'il est vu à partir de la position POS_{SCREEN}(POS(t₁)) sur l'écran est uniquement sélectionné lorsqu'un tracé de force K(t) agissant sur la surface d'entrée pendant la saisie de geste dans un laps de temps allant de t₁ à t₂ présente respectivement des gradients grad (K(t)) en dessous d'un gradient prédéfini GRAD : grad (K(t))< GRADK.

4. Procédé selon l'une quelconque des revendications 1 à 3, dans lequel dans le cas où la valeur | F(t) | augmente après le premier point temporel t₁ jusqu'au déclenchement de la fonction de commutation électrique, avec le déclenchement de la fonction de commutation le champ d'entrée sélectionné au premier point t₁ est sélectionné sur l'écran et le contenu d'entrée de ce champ d'entrée est activé.

5. Procédé selon l'une quelconque des revendications 1 à 4, dans lequel après le déclenchement de la fonction de commutation pour un laps de temps prédéfini Δt_{schalt} des vecteurs de déplacement définis V(POS(t₁), POS(t₂)) pour la sélection d'un champ d'entrée sont rejetés.

6. Procédé selon l'une quelconque des revendications 1 à 5, dans lequel une sélection d'un champ d'entrée et/ou l'activation d'un contenu d'entrée d'un champ d'entrée sélectionné s'effectue uniquement dans la mesure où la valeur | V(POS(t₁), POS(t₂)) | du vecteur de déplacement V(POS(t₁), POS(t₂)) dépasse vers le haut une valeur limite prédéfinie.

7. Procédé selon l'une quelconque des revendications 1 à 6, dans lequel une augmentation ou une réduction de la valeur | F(t) | de la zone de surface F(t) est détecté/exploité respectivement dans des zones de temps de tolérance prédéfinies.

8. Dispositif permettant de sélectionner des champs d'entrée affichés sur un écran et des contenus d'entrée affichés sur l'écran dans un champ d'entrée sélectionné par entrées manuelles dans une surface d'entrée d'une interface d'entrée (202), dans lequel l'interface d'entrée est conçue et configurée pour l'entrée haptique de gestes dans la surface d'entrée, pour commander la sélection d'un champ d'entrée, et permettant d'activer un contenu d'entrée d'un champ d'entrée sélectionné par déclenchement d'une fonction de commutation électrique de l'interface d'entrée par application d'une force minimum prédéfinie sur la surface d'entrée, comprenant :
- un moyen d'exploitation (203), qui est conçu pour déterminer un vecteur de déplacement V(POS(t₁), POS(t₂)) à partir des positions d'entrée déterminées POS(t₁), POS(t₂) d'une entrée manuelle continue de gestes dans la surface d'entrée à un premier point temporel t₁ et à un second point temporel t₂, t : = temps et t₁ < t_{2 ;}
**caractérisé en ce que**
- le moyen d'exploitation (203) est en outre conçu et configuré pour déterminer une valeur | F(t) | d'une zone de surface F(t), avec laquelle l'entrée manuelle de gestes agit sur la surface d'entrée, et
un moyen de commande (204), qui est conçu et configuré pour des directions prédéfinies du vecteur de déplacement V(POS(t₁), POS(t₂)) de telle sorte que s'il est déterminé que | F(t₂) | < | F(t₁) | , une sélection du champ d'entrée adjacent ou au moins le plus proche dans la direction du vecteur de déplacement V(POS(t₁), POS(t₂)) tel qu'il est vu à partir d'une position POS_{SCREEN} (POS(ti)), associée à la position POS(t₁) sur l'écran et une activation lors du déclenchement de la fonction de commutation électrique une fonction associée au contenue d'entrée du champ d'entrée s'effectue et s'il est déterminé que | F(t₂) | > | F(t₁) | , le vecteur de déplacement V(POS(t₁), POS(t₂)) est rejeté et lors du déclenchement de la fonction de commutation électrique, une activation de la fonction associée à la position POS_{SCREEN}(POS(t₁)) est effectuée, dans lequel les étapes de procédé précédentes sont exécutées uniquement pour une ou plusieurs directions du vecteur de déplacement V(POS(t₁), POS(t₂)).

9. Volant de direction d'un véhicule automobile comprenant un dispositif selon la revendication 8.
